# EUROPÄISCHE PATENTSCHRIFT

(11) **EP 3 580 173 B1**
(45) Veröffentlichungstag und Bekanntmachung des Hinweises auf die Patenterteilung: **20.10.2021**
(21) Anmeldenummer: 17751618.4
(22) Anmeldetag: 13.07.2017
(51) Int. Cl.: C01B 33/18

(54) **VERFAHREN ZUR HERSTELLUNG VON HOCHDISPERSEM SILICIUMDIOXID**
PROCESS FOR PREPARING PYROGENIC SILICA
PROCÉDÉ DE PRÉPARATION DE LA SILICE PYROGÉNIQUE

(43) Veröffentlichungstag der Anmeldung: 18.12.2019
(73) Patentinhaber: Wacker Chemie AG, 81737 München (DE)
(72) Erfinder: SOFIN, Mikhail, 84489 Burghausen (DE)
(74) Vertreter: Belz, Ferdinand
(86) Internationale Anmeldenummer: PCT/EP2017/067720
(87) Internationale Veröffentlichungsnummer: WO 2019/011435

(56) Entgegenhaltungen:
- EP-B1- 1 693 343
- DE-A1-102008 054 592
- DE-A1-102011 017 587
- DE-T2- 60 133 416
- GUN'KO ET AL: "Morphology and surface properties of fumed silicas", JOURNAL OF COLLOID AND INTERFACE SCIENCE, ACADEMIC PRESS,INC, US, vol. 289, no. 2, 15 September 2005 (2005-09-15), pages 427-445, XP005031035, ISSN: 0021-9797

## Beschreibung

Gegenstand der Erfindung ist ein Verfahren zur Herstellung von hochdispersem Siliciumdioxid dadurch gekennzeichnet, dass
- eine Mischung aus mindestens zwei Siliciumverbindungen eingesetzt wird, wobei mindestens eine Siliciumverbindung kohlenstoffhaltig und mindestens eine Siliciumverbindung kohlenstofffrei ist,
- ein Brenngas zugeführt wird,
- eine Sauerstoff-enthaltende Quelle zugeführt wird,
- das molare C/Si-Verhältnis dieses Gemisches enthaltend die Siliciumverbindungen, das Brenngas und die Sauerstoff-enthaltende Quelle zwischen 10/BET und 35/BET liegt und
   das molare H/Cl-Verhältnis dieses Gemisches zwischen 0,45+(BET/600) und 0,95+(BET/600) liegt,
   wobei BET die spezifische Oberfläche des herzustellenden pyrogenen Siliciumdioxids gemessen nach der BET-Methode (entsprechend DIN ISO 9277) ist,
- dieses Gemisch als Hauptströmung in einen Reaktionsraum eingebracht, gezündet und umgesetzt wird und
- der entstandene Feststoff abgetrennt wird.

Mittels Flammenreaktion hergestelltes hochdisperses Siliciumdioxid wird auch mit dem Begriff pyrogene Kieselsäure bezeichnet und industriell schon seit mehreren Jahrzehnten produziert. Der Prozess ist beispielsweise in DE 2620737 oder EP 0 790 213 beschrieben. Die Herstellung erfolgt in einem Flammenprozess, bei welchem eine oder mehrere flüchtige siliciumhaltige Verbindungen mittels Hydrolyse und/oder Oxidation zu Siliciumdioxid umgesetzt werden. Dabei werden siliciumhaltige verdampfbare oder gasförmige Verbindungen in eine Flamme eingespeist, welche durch Verbrennung eines wasserbildenden Brennstoffes (meistens H₂) und eines sauerstoffhaltigen Gases (meistens Luft) gebildet wird. Nach der Umsetzung werden die Reaktionsprodukte abgekühlt und das in den Restgasen der Reaktion (bestehend aus gasförmigen Reaktionsprodukten und nicht abreagierten Einsatzstoffen) mitgetragene Siliciumdioxidpulver abgetrennt. Nach Bedarf wird anschließend das erhaltene pulverförmige hochdisperse Produkt entsäuert, indem an dessen Oberfläche adsorbiertes HCl entfernt wird.

Das erhaltene Siliciumdioxid stellt ein sehr feines Pulver mit einer Aggregatsgröße kleiner 1 µm dar. Als eine der wichtigsten Materialeigenschaften wird die hohe spezifische Oberfläche betrachtet, die zwischen 5 und 600 m²/g liegen kann. Sie wird üblicherweise mittels N₂-Adsorption und Auswertung der Adsorptionsisotherme gemäß der Methode von Brunauer, Emmet und Teller (bekannt als BET) entsprechend DIN ISO 9277 bestimmt.

In geringen Anteilen (<0,1%) enthält industriell hergestellte pyrogene Kieselsäure allerdings auch gröbere Teilchen (in den meisten Fällen ebenfalls SiO₂, aber in einer gröberen, gesinterten Form), die selbst bei sehr niedrigen Gehalten in vielen Anwendungen störend sind. So sind beispielweise Defekte durch Kratzer beim Einsatz von Kieselsäuren in Anwendungen des chemisch-mechanisches Polieren und Planarisieren ein oft beschriebenes Problem. Beim Einsatz in Lacken, Harzen und Silikonen kann diese gröbere Fraktion spürbar die Verarbeitbarkeit (vor allem Filtrierbarkeit), Transparenz und Erscheinung der Oberfläche verschlechtern. Das in pyrogener Kieselsäure enthaltene Grobgut wird oft auch als Grit bezeichnet und üblicherweise nach dem in DIN EN ISO 787-18 beschriebenen Messverfahren bestimmt. Bei dieser Messmethode wird der Massenanteil von Partikeln bestimmt, die nach einem speziellen Filterverfahren durch ein Sieb zurückgehalten werden. In der vorliegenden Erfindung wurden zur Grit-Bestimmung Filter mit der Maschenweite von 40 µm eingesetzt.

In der Literatur sind viele siliciumhaltige Verbindungen beschrieben, die als Ausgangsstoffe bei der Herstellung pyrogener Kieselsäure dienen können. So findet man in den Anmeldungen EP 1 681 265 B1, EP 1 681 266 B1, EP 1 693 343 B1 und EP 1 686 093 B1 mehrere geeignete Vertreter: Siliciumtetrachlorid, Trichlorsilan, Dichlorsilan, Monochlorsilan, Methyltrichlorsilan, Dimethyldichlorsilan, Methyldichlorsilan, Dibutyldichlorsilan, Ethyltrichlorsilan, Propyltrichlorsilan. Für Siliciumtetrachlorid (STC, SiCl₄), Trichlorsilan (TCS, SiCl₃H), Dichlorsilan (DCS, SiCl₂H₂), Methyltrichlorsilan (MTCS, CH₃SiCl₃) und Propyltrichlorsilan (PTCS, C₃H₇SiCl₃) sind in den Schriften auch konkrete Beispiele für die Herstellung von hochdispersem Siliciumdioxid dargestellt.

DE 19605672 offenbart auch die Verwendung von Organosilanverbindungen mit der allgemeinen Formel RₙCl₃₋ₙSi-SiRₘCl₃₋ₘ, wobei sich bei R um einen Wasserstoff- oder aliphatischen oder aromatischen Kohlenwasserstoff-Rest handelt und n bzw. m ganze Zahlen von 0 bis 3 sind.

Bei der kommerziellen Herstellung werden allerdings überwiegend Siliciumtetrachlorid (STC) und Methyltrichlorsilan (MTCS) eingesetzt. Das liegt einerseits an der guten Verfügbarkeit und den geringen Kosten der Rohstoffe und anderseits an der guten Qualität des daraus entstehenden Produktes.

Am häufigsten wird pyrogene Kieselsäure aus STC hergestellt, welches in der Regel durch die Umsetzung von Si mit HCl gewonnen wird (Si + 4 HCl = SiCl₄ + 2 H₂). Bei dieser Reaktion können allerdings auch Nebenprodukte wie insbesondere beträchtliche Mengen TCS gebildet werden. Außerdem können als Nebenprodukte sogenannte Hochsieder (bei hoher Temperatur siedende Polychlorsilane wie Hexachlordisilan, Pentachlordisilan usw.) entstehen. Darüber hinaus werden mehrere im Rohsilicium enthaltene Verunreinigungen (z.B. Bor oder Aluminium) mit HCl zu Chloriden umgesetzt, die sich dann im Chlorsilan und in Folge auch in der pyrogenen Kieselsäure befinden. Die erwähnten Nebenprodukte und Verunreinigungen aus der Umsetzung von Rohsilicium mit HCl stören den Herstellprozess von pyrogener Kieselsäure und/oder beeinflussen die Produktqualität negativ. Aus diesen Gründen muss auf diesem Weg erhaltenes STC vor der Umsetzung zur pyrogenen Kieselsäure in der Flammenreaktion aufwendig gereinigt werden, was diesen Rohstoff spürbar verteuert.

Eine alternative Quelle von Siliciumtetrachlorid ist die Herstellung von hochreinem Polysilicium, da STC dabei in beträchtlichen Mengen als Nebenprodukt anfällt. Dieses enthält allerdings in der Regel spürbare Mengen niedersiedende Chlorsilane wie TCS, DCS und MCS (Monochlorsilan, SiClH₃). Einerseits sind diese Chlorsilane sehr reaktiv und stören den Flammenprozess beträchtlich. So können sie Flammenrückschläge verursachen, welche zum Ausfall der Anlage und damit zu Produktionsverlusten führen. Darüber hinaus begünstigen diese Stoffe die Bildung von grobkörnigen Siliciumdioxid-Teilchen, welche bei den meisten Anwendungen unerwünscht sind.

Der zweite wichtigste Ausgangsstoff für die Herstellung von pyrogener Kieselsäure ist Methyltrichlorsilan. Diese Verbindung entsteht bei der Synthese von Methylchlorsilanen nach dem Müller-Rochow-Verfahren, welches vor allem auf die Synthese von Dimethyldichlorsilan (DMDCS, Si(CH₃)₂Cl₂) ausgerichtet ist. DMDCS dient als Hauptrohstoff für die Produktion von Silikonen. MTCS ist als überschüssiges Nebenprodukt dieser Reaktion günstig verfügbar, zeigt aber wesentliche Nachteile bei der Herstellung von pyrogenem Siliciumdioxid. Bei der Oxidation der Methylgruppe wird sehr viel Energie freigesetzt, so dass die stöchiometrische Umsetzung von MTCS viel zu hohe Flammentemperaturen verursachen und so zu unakzeptablen Produkteigenschaften führen würde. Um dem entgegenzuwirken, wird in der industriellen Praxis bei der Verwendung von MTCS der Reaktion viel zusätzliche Luft zugegeben, um durch die Verdünnung des Energieträgers die Flammentemperatur in den benötigten Bereich zu bringen. D.h., die Flamme wird durch die Zugabe einer sehr großen Luftmenge stark verdünnt. Diese Verdünnung reduziert deutlich die Raum-Zeit-Ausbeute der Produktionsanlage, was die Wirtschaftlichkeit des Herstellprozesses von pyrogener Kieselsäure aus MTCS negativ beeinflusst.

DE 601 33 416 T2 offenbart, dass als Siliciumverbindungen des Rohmaterials z.B. die Verbindungen Siliciumtetrachlorid (STC), Trichlorsilan (TCS), Dichlorsilan (DCS) und Methyltrichlorsilan (MTCS) eingesetzt werden können. Es werden keine Mischungsverhältnisse beschrieben. In allen sechs Bespielen wird nur STC als einziges Silan und damit keine kohlenstoffhaltige Siliciumverbindung eingesetzt, d.h. das C/Si-Verhältnis ist immer 0. Darüber hinaus offenbart die Schrift keinen bevorzugten Bereich für das H/Cl-Verhältnis. Bei den aufgeführten Beispielen liegen diese Verhältnisse außerhalb des im Anspruch 1 dieser Erfindung beanspruchten Bereiches.

Auch die allgemeine Beschreibung aus DE 10 2008 054592 A1 nennt keine bevorzugten Mischungsverhältnisse definierter einzusetzender Siliciumverbindungen, sondern beschreibt die Siliciumverbindung ganz allgemein als Silan enthaltend mindestens eine dampfförmige Silicium-haltige Verbindung und nennt Siliciumtetrachlorid (STC), Wasserstoffsiliciumtrichlorid und Methylsiliciumtrichlorid (Methyltrichlorsilan, MTCS) sowie deren Mischungen als bevorzugte Beispiele.

In den Beispielen 1-8 und 10 wird jeweils nur eine Siliciumverbindung (MTCS oder STC) eingesetzt. Lediglich in den Beispielen 9 und 11 werden mehr als eine Siliciumverbindung eingesetzt, wobei bei einer BET von 200 bzw. 150 m²/g das Verhältnis der C/Si-Atome 1 bzw. 3,065 beträgt und damit nicht im Bereich zwischen 10/BET und 35/BET (0,05-0,175 bzw.0,067-0,233) liegt.

DE 10 2008 054592 A1 gibt keinen Hinweis darauf, in welchem Mischungsverhältnis Siliciumverbindungen eingesetzt werden müssen, wenn pyrogene Kieselsäure mit einer bestimmten spezifischen Oberfläche (BET) herzustellen ist.

EP 1 693 343 B1 beschreibt, dass zusätzlich zu einer weiteren Komponente, STC in einem Anteil von 60-95 Gew.-% eingesetzt werden muss. Mit STC liegt auf jeden Fall eine kohlenstofffreie Siliciumverbindung vor. Da die weitere Komponente definiert ist als H₃SiCl, H₂SiCl₂, HSiCl₃, CH₃SiCl₃, (CH₃)₂SiCl₂, (CH₃)₃SiCl oder (n-C₃H₇)SiCl₃ kann diese Kohlenstoff enthalten oder kohlenstofffrei sein. Es wird daher nicht zwingend eine kohlenstoffhaltige Siliciumverbindung eingesetzt.

Angaben zu konkreten Mischverhältnissen werden nicht gemacht. In allen 5 erfindungsgemäßen Beispielen und 6 Vergleichsbeispielen aus EP 1 693 343 B1 liegen zudem alle C/Si und H/Cl-Verhältnisse außerhalb des in der vorliegenden Erfindung beanspruchten Bereichs.

Auch EP 1 693 343 B1 gibt keinen Hinweis darauf, in welchem Mischungsverhältnis die Siliciumverbindungen eingesetzt werden müssen oder ob weitere bzw. andere Ausgangsverbindungen erforderlich sind, wenn pyrogene Kieselsäure mit einer bestimmten spezifischen Oberfläche (BET) herzustellen ist.

DE 10 2011 017 587 A1 offenbart, dass als Siliciumverbindungen SiCl₄, CH₃SiCl₃, (CH₃)₂SiCl₂, (CH₃)₃SiCl, HSiCI₃, H₂SiCl₂, H₃SiCl, (CH₃)₂HSiCl, CH₃C₂H₅SiCl₂, (n-C₃H₇)SiCl₃ und (H₃C)ₓCl₃₋ₓSiSi(CH₃)_{y}Cl_{3-y} mit x + y = 2 bis 6 eingesetzt werden können. Es wird kein besonderes Mischungsverhältnis von Siliciumverbindungen hervorgehoben. In allen Beispielen wird nur STC eingesetzt, so dass das C/Si-Verhältnis 0 ist.

Gun'ko, V.M. et al. (Morphology and surface properties of fumed silicas. J. Colloid and Interface Sci. 289, 2005, S. 427-445) offenbart, dass pyrogene Kieselsäure durch Verbrennen von SiCl₄ in einer O₂/H₂/N₂-Flamme hergestellt werden kann, wobei die Produkteigenschaften in Abhängigkeit von Prozessbedienungen (wie Temperaturverteilung in der Flamme, Flammenlänge, Strömungsturbulenz und -geschwindigkeit, Verhältnis der Reaktanden) breit variiert werden können. Diese Schrift offenbart weder das C/Sinoch das H/Cl-Verhältnis gemäß des vorliegenden Anspruchs 1.

Die Aufgabe der Erfindung besteht darin, ein wirtschaftliches Verfahren zur Herstellung von hochdispersem Siliciumdioxid in einer Flammenreaktion aus Mischungen enthaltend günstige Siliciumverbindungen zur Verfügung zu stellen, das, ohne dass es zu Prozessstörungen kommt, zu qualitativ hochwertigen Produkten führt. Günstige Siliciumverbindungen zeichnen sich im Rahmen dieser Erfindung dadurch aus, dass sie entweder preislich gesehen günstig sind, d.h. billig und/oder dass sie verfahrenstechnisch gesehen günstig sind, z.B. erhalten als Nebenprodukt (z.B. unerwünschtes Nebenprodukt oder "Abfall") eines anderen Prozesses, d.h. sie sind gesamtwirtschaftlich gesehen günstig.

Die Aufgabe wird durch das erfindungsgemäße Verfahren zur Herstellung von hochdispersem Siliciumdioxid gelöst, das sich dadurch auszeichnet, dass
- als Si-Quelle eine Mischung aus mindestens zwei Siliciumverbindungen eingesetzt wird, wobei mindestens eine Siliciumverbindung kohlenstoffhaltig und mindestens eine Siliciumverbindung kohlenstofffrei ist,
- ein Brenngas zugeführt wird,
- eine Sauerstoff-enthaltende Quelle zugeführt wird,
- das molare C/Si-Verhältnis dieses Gemisches enthaltend die Siliciumverbindungen, das Brenngas und die Sauerstoff-enthaltende Quelle zwischen 10/BET und 35/BET liegt und
   das molare H/Cl-Verhältnis dieses Gemisches zwischen 0,45+(BET/600) und 0,95+(BET/600) liegt,
   wobei BET die spezifische Oberfläche des herzustellenden pyrogenen Siliciumdioxids gemessen nach der BET-Methode (entsprechend DIN ISO 9277) ist,
- dieses Gemisch als Hauptströmung in einen Reaktionsraum eingebracht, gezündet und umgesetzt wird und
- der entstandene Feststoff abgetrennt wird.

Hochdisperses Siliciumdioxid wird hergestellt aus Siliciumenthaltenden Verbindungen, die also eine Quelle für Si-Atome darstellen und als Si-Quelle bezeichnet werden. Erfindungsgemäß wird eine Mischung aus mindestens zwei Siliciumverbindungen eingesetzt, die mindestens eine kohlenstoffhaltige und mindestens eine kohlenstofffreie Siliciumverbindung (Si-Verbindung) umfasst.

Als kohlenstoffhaltige Si-Verbindungen werden bevorzugt Methyltrichlorsilan (MTCS), Methyldichlorsilan (MDCS) oder eine Mischung aus MTCS und MDCS eingesetzt.

Als kohlenstofffreie Si-Verbindungen werden bevorzugt Siliciumtetrachlorid (STC), Trichlorsilan (TCS), Dichlorsilan (DCS) oder eine Mischung aus mindestens zwei der genannten Verbindungen eingesetzt. Eine Mischung aus mindestens zwei der genannten Verbindungen bedeutet, dass die Mischung mindestens zwei Verbindungen ausgewählt aus der Gruppe bestehend aus STC, TCS und DCS enthält.

Besonders bevorzugt werden als Si-Quelle Mischungen aus mindestens drei Siliciumverbindungen eingesetzt.

Ganz besonders bevorzugt werden als Si-Quelle Mischungen enthaltend Siliciumtetrachlorid (STC), Trichlorsilan (TCS), Dichlorsilan (DCS) und Methyltrichlorsilan (MTCS) verwendet.

Erfindungsgemäß erfolgt das Verfahren in Gegenwart eines Brenngases bzw. Brenngasgemisches, das auch als Quelle für H-Atome und gegebenenfalls C-Atome dient. Bevorzugt werden als Brenngase Wasserstoff, Methan, Erdgas, Ethan, Propan und/oder andere gasförmige Kohlenwasserstoffe oder deren Mischungen eingesetzt.

Insbesondere bevorzugt wird Wasserstoff als Brenngas eingesetzt.

Erfindungsgemäß wird dem Verfahren eine Sauerstoff-enthaltende Quelle zugeführt, die einerseits zusammen mit dem Brenngas dem Erreichen der benötigten Temperaturen dient und andererseits eine Quelle für O-Atome ist. Bevorzugt werden als Sauerstoff-enthaltende Quelle Sauerstoff, Luft oder deren Mischungen verwendet. Insbesondere bevorzugt wird Luft als Sauerstoff-enthaltende Quelle eingesetzt. Im Rahmen dieser Erfindung wird diese Luft auch als Primärluft (PL) bezeichnet.

Erfindungsgemäß wird das Gemisch enthaltend die Siliciumverbindungen, Brenngas und die Sauerstoff-enthaltende Quelle als Hauptströmung bezeichnet.

Erfindungsgemäß liegt das molare Verhältnis an Kohlenstoffatomen je Siliciumatom (C/Si-Verhältnis) der Hauptströmung zwischen 10/BET und 35/BET, wobei BET die spezifische Oberfläche des herzustellenden hochdispersen Siliciumdioxids gemessen nach der BET-Methode (entsprechend DIN ISO 9277) ist.

Erfindungsgemäß liegt das molare Verhältnis an Wasserstoffatomen je Chloratom (H/Cl-Verhältnis) der Hauptströmung zwischen 0,45+(BET/600) und 0,95+(BET/600) liegt, wobei BET die spezifische Oberfläche des herzustellenden hochdispersen Siliciumdioxids gemessen nach der BET-Methode (entsprechend DIN ISO 9277) ist.

Das molare Verhältnis an Kohlenstoffatomen je Siliciumatom, bzw. Wasserstoffatomen je Chloratom wird bestimmt, indem die in allen eingesetzten Verbindungen der Hauptströmung vorhandene Menge an Kohlenstoff- bzw. Wasserstoffatomen durch die in allen Verbindungen der Hauptströmung vorhandene Menge an Silicium- bzw. Chloratomen dividiert wird.

Ein besonderer Vorteil der Erfindung ist, dass je nach gewünschter spezifischer Oberfläche des Produkts (BET) bestimmt werden kann, in welchem Mischungsverhältnis die zur Verfügung stehenden Ausgangsverbindungen bevorzugt eingesetzt werden müssen oder ob weitere bzw. andere Ausgangsverbindungen erforderlich sind.

Die Hauptströmung wird mittels einer Düse in einen Reaktionsraum eingebracht. Dort wird sie gezündet und umgesetzt, d.h. in der Flamme zur Reaktion gebracht. Im Rahmen dieser Erfindung werden die Begriffe "Reaktorkammer", "Brennkammer des Reaktors" und "Reaktionsraum" synonym verwendet. Ebenfalls synonym werden die Begriffe "Düse", "Brenner" und "Brennerdüse" verwendet.

Anschließend wird der entstandene Feststoff abgetrennt. Bei diesem handelt es sich um hochdisperses Siliciumdioxid. Hochdisperses Siliciumdioxid im Sinne der Erfindung wird oft auch als pyrogene Kieselsäure bezeichnet, weil es mittels eines Flammprozesses erhalten wird und aufgrund von Silanol-Gruppen auf der Partikel-Oberfläche als Sauerstoffsäure des Siliciums betrachtet werden kann.

In einer vorteilhaften und bevorzugten Ausführung der Erfindung wird die Flamme von Sekundärgas umgeben. Bevorzugt wird als Sekundärgas Luft eingesetzt. Im Rahmen dieser Erfindung wird diese Luft auch mit dem Begriff Sekundärluft (SL) bezeichnet.

Das Volumen-Verhältnis vom Sekundärgas zur Hauptströmung liegt bevorzugt zwischen 0,01 bis 0,4 und ganz besonders bevorzugt zwischen 0,01 und 0,045. Bevorzugt wird das Verhältnis der Strömungsgeschwindigkeiten vom Sekundärgas und der Hauptströmung zwischen 0,1 und 0,8 gehalten.

Durch das Umgeben der Flamme mit Sekundärgas werden Rückzündungen vermieden und die störende Ablagerung des Produkts an der Düse reduziert. Allerdings verringert das Sekundärgas die Raumzeitausbeute des Verfahrens, weil es nicht unmittelbar an der Reaktion teilnimmt. Es hat sich als günstig erwiesen, das Volumen-Verhältnis von Sekundärgas und Hauptströmung in einem bestimmten Verhältnis zu halten. Außerdem wurde überraschenderweise festgestellt, dass die Ausströmungsgeschwindigkeit des Sekundärgases einen Einfluss auf die Flammenreaktion hat. Wird diese Geschwindigkeit in einem bestimmten Verhältnis zur Ausströmungsgeschwindigkeit der Hauptströmung gehalten, kann die Menge an Sekundärgas auf ein Minimum reduziert werden, ohne dabei seine positive Wirkung auf die Rückzündungen und Ablagerungen zu verlieren. Außerdem führt das Einbringen von Sekundärgas zur Reduzierung der Flammentemperatur, was durch mehr Brenngas kompensiert werden muss. Somit ist eine möglichst kleine Menge an Sekundärgas auch vorteilhaft für das Einsparen von Brenngas.

Unter der Strömungsgeschwindigkeit wird im Rahmen dieser Erfindung die Geschwindigkeit verstanden, mit der ein Gas oder Gasgemisch in einen Raum strömt bzw. geleitet wird, z.B. mit der ein Gas oder Gasgemisch durch die Brennerdüse in den Reaktionsraum bzw. die Brennkammer des Reaktors strömt bzw. geleitet wird. Diese kann aus dem Volumen des strömenden Gases oder Gasgemisches und der Zuführungs-Fläche der Einrichtung (das ist z.B. die Querschnittsfläche der Brennerdüse für die Hauptströmung bzw. die Querschnittsfläche des die Brennerdüse umgebenden Rings für das Sekundärgas) errechnet werden. Einfacherweise werden im Rahmen dieser Erfindung zur Berechnung der Strömungsgeschwindigkeiten die Volumina der Gase in Normkubikmeter je Zeiteinheit betrachtet. Die Veränderung der Querschnittsfläche aufgrund der thermischen Ausdehnung von Bauteilen wird vernachlässigt. Da es sich bei der Strömungsgeschwindigkeit um die Geschwindigkeit handelt, mit der ein Gas oder Gasgemisch in einen Raum strömt oder geleitet wird, wird diese auch mit dem Begriff Ausströmungsgeschwindigkeit bezeichnet.

Bevorzugt sollte das Sekundärgas bei der Einführung in den Reaktionsraum etwa die gleiche Temperatur haben, wie die durch die Brennerdüse eingeleitete Hauptströmung. Daher ist es bevorzugt, dass das Sekundärgas bei der Einführung in den Reaktionsraum auf die Temperatur der Hauptströmung temperiert ist. Besonders bevorzugt liegt diese Temperatur zwischen 70 und 120°C.

Nach der Flammenreaktion wird der entstandene Feststoff abgetrennt. Bei der Abtrennung des gebildeten Feststoffs werden bevorzugt die gasförmigen Stoffe entfernt. Nach der Abtrennung wird der entstandene Feststoff bevorzugt mit Heißgasen behandelt. Besonders bevorzugt werden die Heißgase durch die Verbrennung von Methan, Wassersoff oder Erdgas gebildet. Insbesondere bevorzugt wird den Heißgasen kein Wasserdampf beigemischt. Bevorzugt erfolgt die Behandlung bei 400-600 °C. In einer besonders bevorzugten Ausführungsform wird die erforderliche Temperatur durch den Zusatz von Luft zu den Verbrennungsabgasen eingestellt.

Das erfindungsgemäße Verfahren zeichnet sich durch die Vorteile aus, dass wenn eine bestimmte durch das anspruchsgemäße C/Si-und H/Cl-Verhältnis charakterisierte Zusammensetzung von Siliciumverbindungen im Verfahren verwendet wird, dieses nicht nur störungsfrei und ohne Flammenrückschläge läuft, sondern auch hochdisperses Siliciumdioxid hergestellt wird, das einen geringen Grit-Anteil bzw. Grobgutanteil, d.h. eine hohe Qualität aufweist. Gleichzeitig zeigt das Verfahren eine gute Raum-Zeit-Ausbeute, d.h. das Verfahren ist wirtschaftlich relevant. Überraschenderweise können beliebige, insbesondere günstige (preislich und/oder gesamtwirtschaftlich gesehen) Si-Quellen wie z.B. eine Mischung von Chlorsilanen aus der Polysilicium-Herstellung oder MTCS aus der Müller-Rochow-Synthese zur Herstellung von hochdispersem Siliciumdioxid hoher Qualität eingesetzt werden, solange die eingesetzten Mischungen mindestens eine kohlenstoffhaltige und eine kohlenstofffreie Siliciumverbindung enthalten und die Hauptströmung das anspruchsgemäße C/Si- und H/Cl-Verhältnis aufweist.

Es weiterer Vorteil der Erfindung ist der geringe Verbrauch von Brenngas (welcher z.B. aus dem niedrigen H/Cl-Verhältnis ersichtlich ist), was die Wirtschaftlichkeit des Verfahrens begünstigt.

Der Grit- bzw. Grobgutanteil kann wie in den Analysenmethoden beschrieben bestimmt werden. Der Grobgutanteil in Metalloxiden ist eine wesentliche qualitätsbestimmende Größe: ein geringer Grobgutanteil ist in vielen Anwendungen vorteilhaft. Insbesondere beim Einsatz als verstärkender Füllstoff in Elastomeren, bei der Rheologiekontrolle von Farben, Lacken, Kleb- und Dichtstoffen und im Bereich des chemisch-mechanischen-Planarisierens von Oberflächen im Halbleiterbereich ist ein geringer Grobgutanteil von Vorteil. Beispielsweise werden solche Partikeldispersionen auch in der Polieranwendung von Halbleiterelementen eingesetzt, in der große Partikel zu Kratzern führen würden.

Die Raum-Zeit-Ausbeute (R-Z-Ausbeute) berechnet sich aus der Produktmenge (SiO₂ in g) pro 1 Nm³ Einsatzstoffe (Siliciumverbindungen + Brenngase + Primärgas + Sekundärgas). Der Wert der R-Z-Ausbeute liegt bevorzugt über 200-(BET/3) g/Nm³, besonders bevorzugt über 250-(BET/3) g/Nm³ und ganz besonders bevorzugt über 300-(BET/3) g/Nm³, wobei BET die spezifische Oberfläche des herzustellenden pyrogenen Siliciumdioxids gemessen nach der BET-Methode (entsprechend DIN ISO 9277) ist.

Erfindungsgemäß handelt es sich um ein stabiles Verfahren, d.h. der Reaktor zur Herstellung von hochdispersem Siliciumdioxid läuft störungsfrei und ohne Flammenrückschläge. Die Hauptströmung wird erst in der Brennkammer des Reaktors gezündet. Störungsfrei bedeutet, dass vor Eintritt in diese Reaktorkammer keine Zündung erfolgt. Ebensowenig kommt es zu Flammenrückschlägen aus der Brennerdüse in vor dieser Brennerdüse liegende Räume, Filter und/oder Mischelemente.

Zum besseren Verständnis wird die Erfindung anhand der unten beschriebenen Beispiele und Vergleichsbeispiele erläutert, ohne dadurch beschränkt zu werden.

**Analysemethoden** und allgemeine Angaben:
1. Bestimmung des pH-Werts
   Die Bestimmung des pH-Werts erfolgte entsprechend DIN EN 787-9, wobei jedoch eine 4%-ige Dispersion der Probe in Wasser eingesetzt wurde.
2. Bestimmung der spezifischen Oberfläche
   Die spezifische Oberfläche wurde mittels N₂-Adsorption und Auswertung der Adsorptionsisotherme gemäß der Methode von Brunauer, Emmet und Teller (bekannt als BET) entsprechend DIN ISO 9277 bestimmt.
3. Bestimmung des Gehalts an Grobpartikeln
   Die Bestimmung des Gehalts an Grobpartikeln (auch Grit oder Grobgut genannt) erfolgte nach dem Messverfahren DIN EN ISO 787-18, wobei zur Separierung bzw. Bestimmung des Anteils an Grobpartikeln ein Sieb mit der Maschenweite von 40 µm eingesetzt wurde.

Soweit nicht anders angegeben, beziehen sich alle %-Angaben auf die Masse/das Gewicht.

Der Normkubikmeter (Abkürzung Nm³) ist eine in der Verfahrenstechnik verwendete Einheit für das Normvolumen eines Gases. Die Definition des Normkubikmeters ist in DIN 1343 und in ISO 2533 festgelegt. Ein Normkubikmeter ist die Menge, die einem Kubikmeter Gas bei einem Druck von 1,01325 bar, einer Luftfeuchtigkeit von 0 % (trockenes Gas) und einer Temperatur von 0°C (DIN 1343) beziehungsweise 15°C (ISO 2533) entspricht. D.h., ein Normkubikmeter Gas hat unter den festgelegten Bedingungen ein Volumen von 1 m³, bei abweichenden Bedingungen aber im Allgemeinen ein anderes Volumen, das durch spezielle Umrechnungen bestimmt werden kann.

Nm³/h ist das pro 1 Stunde gelieferte Volumen an Gas oder Dampf.

### Beispiele:

Die Herstellung von hochdispersem Siliciumdioxid wurde in allen Fällen wie im Stand der Technik (s. z.B. EP 1 693 343 B1, EP 1 686 093 B1, EP 1 681 266 B1, EP 1 381 265 B1 oder DE 26 20 737 C2) beschrieben durchgeführt, wobei folgende Parameter und Komponenten zum Einsatz kamen:

Ein Gemisch von Siliciumverbindungen wurde, getrennt oder gemeinsam, verdampft und die die Siliciumverbindungen enthaltende Dampfphase mit Wasserstoff und Luft gemischt. Die Anteile von Siliciumverbindungen in den Gemischen sind in den einzelnen Beispielen in Massenprozenten aufgeführt.

Bei den jeweiligen Zusammensetzungen sind alle wesentlichen Komponenten aufgelistet. In der industriellen Praxis ist es nicht zu vermeiden, dass die Gemische auch Minderanteile von anderen Siliciumverbindungen enthalten. Diese nicht weiter spezifizierten Verunreinigungen lagen allerdings stets bei unter 0,5 Gew.-% und beeinflussten dadurch den Herstellprozess nicht.

Die Mischung A enthaltend die verdampften Siliciumverbindungen, Brenngas (bei allen Beispielen Wasserstoff) und Luft (als Primärluft bezeichnet, PL) wurde als Hauptstrom durch einen Brenner in eine Reaktorkammer überführt und nach einer Zündung in einer Flammenreaktion umgesetzt. Um diese Mischung A wurde in die Reaktionskammer ein Sekundärgas (in allen Beispielen Luft) eingeleitet, welches die Flamme umgab. Die Einbringung des Sekundärgases Luft erfolgte kontrolliert, wobei sowohl die Menge als auch die Ausströmungsgeschwindigkeit gesteuert wurden. Die aufgeführte Berechnung der Ausströmungsgeschwindigkeit für die Hauptströmung durch den Brenner und für die Sekundärluft wurde unter Normalbedingungen (20 °C, 1 atm) durchgeführt, ungeachtet der Tatsache, dass die Einführung der Komponenten bei etwas erhöhten Temperaturen (in allen Beispielen bei 95°C) geschah. Nach der Reaktion wurde der Feststoff von gasförmigen Stoffen abgetrennt und anschließend mit heißen Gasen auf einen pH-Wert zwischen 4,0 und 5,0 entsäuert. Die heißen Gase wurden durch die Verbrennung von Erdgas mit Luft gebildet.

### Vergleichsbeispiel V1:

Bei diesem Vergleichsbeispiel wurde als Si-Quelle eine Mischung von Silanen eingesetzt, die aus 90% STC, 5% TCS und 5% DCS bestand. 1000 kg/h dieser Silanmischung wurden verdampft und anschließend mit 265 Nm³/h Wasserstoff und 850 Nm³/h Primärluft (PL) gemischt und nach einer Initialzündung in einer Flamme in die Reaktion eingebracht. Die Austrittsgeschwindigkeit der Hauptströmung bestehend aus den genannten Komponenten Silanmischung, Wasserstoff und Primärluft aus der Brennerdüse (v(HS))betrug 44 m/s. Zusätzlich wurde 600 Nm³/h Sekundärluft (SL) mit einer Geschwindigkeit (v(SL)) von 40 m/s in die Brennkammer des Reaktors geleitet, welche die Flamme umgab.

Das entstandene Siliciumdioxid und die Reaktionsgase wurden in ein Kühlsystem geleitet, wo sie zunächst auf unter 200 °C abgekühlt wurden. Nachfolgend wurde der Feststoff mit Hilfe eines Zyklons oder eines Filters aus dem Prozessgas abgetrennt. Anschließend wurde das Siliciumdioxid mit heißen Gasen bei einer Temperatur von rund 500 °C behandelt und dadurch entsäuert.

Der beschriebene Prozess zeichnete sich durch eine geringe Stabilität aus. Die Verbrennung wurde durch sporadische Flammenrückschläge gestört, die zum Ausfall der Anlage führten. Das entstehende Produkt wies eine spezifische Oberfläche von 150 m²/g auf. Außerdem zeichnete sich das erhaltene pulverförmige Produkt durch einen vergleichsweise hohen Gehalt an Grobpartikeln von 0,02 Gew.-% aus.

Die experimentellen Daten und Analysedaten sind in Tabelle 1 aufgeführt.

### Vergleichsbeispiel V2:

In diesem Vergleichsbeispiel wurde die Herstellung von pyrogener Kieselsäure analog dem Vergleichsbeispiel V1 durchgeführt.

Abweichend davon wurde als Si-Quelle MTCS eingesetzt, welches in einer Menge von 500 kg/h mit 50 Nm³/h Wasserstoff und 1000 Nm³/h Luft gemischt wurde.

Die Verbrennung dieser Mischung verlief stabil und es wurde dabei ein Produkt gebildet, welches bei der gleichen spezifischen Oberfläche von 150 m²/g einen niedrigeren Grit-Anteil von 0,01% aufwies. Der wesentliche Nachteil dieser Prozessführung nach dem Stand der Technik war eine geringe Raum-Zeit-Ausbeute. So wurde in diesem Beispiel etwa die gleiche Gesamtgasmenge (Silane + Wasserstoff + Primärluft + Sekundärluft) prozessiert wie in Vergleichsbeispiel 1, während die R-Z-Ausbeute nur etwa 60% betrug.

Die experimentellen Daten und Analysedaten sind in Tabelle 1 aufgeführt.

### Vergleichsbeispiel V3:

In diesem Vergleichsbeispiel wurde die Herstellung von pyrogener Kieselsäure analog dem Vergleichsbeispiel V1 durchgeführt. Abweichend davon wurde als Si-Quelle eine Mischung aus STC (68%) und MTCS (32%) eingesetzt, welche in der Menge von 700 kg/h mit 150 Nm³/h Wasserstoff und 1000 Nm³/h Luft gemischt wurde.

Die Mischung konnte stabil verbrannt werden. Der Prozess wies allerdings eine vergleichsweise niedrige Raum-Zeit-Ausbeute auf. Außerdem zeichnete sich das hergestellte Siliciumdioxid mit der spezifischen Oberfläche von 300 m²/g durch einen relativ hohen Grit-Anteil von 0,015% aus.

Die experimentellen Daten und Analysedaten sind in Tabelle 1 aufgeführt.

### Vergleichsbeispiel V4:

In diesem Vergleichsbeispiel wurde die Herstellung von pyrogener Kieselsäure analog dem Vergleichsbeispiel V1 durchgeführt.

Abweichend davon wurde als Si-Quelle eine Mischung aus STC (76%), TCS (19%) und MTCS (5%) eingesetzt, welche in der Menge von 700 kg/h mit 250 Nm³/h Wasserstoff und 900 Nm³/h Luft gemischt wurde.

Die Umsetzung der beschriebenen Mischung in der Flammenreaktion ergab pyrogene Kieselsäure mit der spezifischen Oberfläche von 150 m²/g. Der Prozess wurde allerdings durch Flammeninstabilitäten geprägt, welche immer wieder zum Ausfall der Reaktion durch Flammenrückschläge führten. Darüber hinaus wurde für das hergestellte Produkt mit 0,015% ein vergleichsweise hoher Grit-Gehalt bestimmt.

Die experimentellen Daten und Analysedaten sind in Tabelle 1 aufgeführt.

### Beispiel 1 (erfindungsgemäß)

Bei diesem Beispiel wurde ein Silangemisch aus der Herstellung von Polysilicium, welches analog dem Vergleichsbeispiel V1 aus STC, TCS und DCS bestand, mit der vierten Komponente MTCS, vermengt, sodass eine neue Mischung mit der folgenden Zusammensetzung entstand: STC 81%, TCS 4,5%, DCS 4,5%, MTCS 10%. Für die Herstellung von pyrogenem Siliciumdioxid wurden 1000 kg/h dieser neuen vierkomponentigen Silanmischung analog dem Vergleichsbeispiel V1 zusammen mit 220 Nm³/h Wasserstoff und 850 Nm³/h Primärluft vermischt und durch Zündung zur Reaktion gebracht. Die Austrittgeschwindigkeit der Reaktionsmischung aus der Düse betrug 43 m/s. Zusätzlich wurde in die Brennkammer des Reaktors 600 Nm³/h Sekundärluft mit 40 m/s eingeführt, welche die Flamme umgab. Nach der Abtrennung und Entsäuerung wurde ein Produkt mit einer BET-Oberfläche von 150 m²/g erhalten. Im Unterschied zum Vergleichsbeispiel V1 ließ sich die Verbrennung störungsfrei durchführen und es entstand dabei feines Pulver mit einem geringen Anteil an Grobpartikeln (Grit-Gehalt 0,008%). Im Unterschied zum Vergleichsbeispiel V2 verlief die Reaktion mit einer deutlich höheren Raum-Zeit-Ausbeute.

Die experimentellen Daten und Analysedaten sind in Tabelle 2 aufgeführt.

### Beispiel 2 (erfindungsgemäß)

Bei diesem erfindungsgemäßen Beispiel wurde als Si-Quelle eine Silanmischung aus STC (68%), TCS (17%) und MTCS (15%) verwendet. Sie wurde in einer Menge von 1000 kg/h mit Wasserstoff (210 Nm³/h) und Primärluft (900 Nm³/h) gemischt und durch Zündung zur Reaktion gebracht. Die Sekundärluftmenge, welche die Flamme umgab, betrug 600 Nm³/h.

Die Verbrennung verlief stabil und es hat sich hochdisperses Siliciumdioxid mit einer spezifischen Oberfläche von 150 m²/g gebildet. Das feinpulverige Produkt wies eine geringe Konzentration an Grobpartikeln von 0,007% auf.

Die experimentellen Daten und Analysedaten sind in Tabelle 2 aufgeführt.

### Beispiel 3 (erfindungsgemäß)

In diesem Beispiel wurde ebenso wie in Vergleichsbeispiel V3 hochdisperses SiO₂ mit einer spezifischen Oberfläche von 300 m²/g hergestellt. Als Si-Quelle wurden die gleichen Silane, allerdings in einem anderen Mischungsverhältnis, eingesetzt: STC (90,6%) und MTCS (9,4%). Die Silan-Mischung in der Menge von 800 kg/h wurde zusammen mit Wasserstoff (210 Nm³/h) und Primärluft (900 Nm³/h) durch Zündung zur Reaktion gebracht wurde.

Wie auch im Vergleichsbeispiel V3 wies das erfindungsgemäße Verfahren eine stabile Verbrennung auf. Der Prozess lieferte allerdings eine spürbar höhere und dadurch wirtschaftlich vorteilhaftere Raumzeitausbeute (157 vs. 140 g/Nm³) auf. Darüber hinaus zeichnete sich das hergestellte Siliciumdioxid mit der spezifischen Oberfläche von 300 Nm³/h durch einen niedrigeren Grit-Anteil von 0,007% aus.

Die experimentellen Daten und Analysedaten sind in Tabelle 2 aufgeführt.

### Beispiel 4 (erfindungsgemäß)

In diesem erfindungsgemäßen Beispiel wurde eine Silanmischung aus STC (72%), TCS (18%) und Methyldichlorsilan (10%) eingesetzt, welche in der Menge von 1000 kg/h zusammen mit Wasserstoff (190 Nm³/h) und Primärluft (950 Nm³/h) gemischt und durch Zündung zur Reaktion gebracht wurde.

Die Umsetzung der beschriebenen Mischung in der Flammenreaktion ergab pyrogene Kieselsäure mit einer spezifischen Oberfläche von 150 m²/g. Der Prozess wies keine Flammeninstabilitäten auf. Für das hergestellte Produkt konnte ein vergleichsweise niedriger Grit-Gehalt von 0,006% bestimmt werden.

Die experimentellen Daten und Analysedaten sind in Tabelle 2 aufgeführt.

### Beispiel 5 (erfindungsgemäß)

Bei diesem Beispiel wurde die gleiche Silanmischung wie in Beispiel 1 verwendet, d.h. die gleichen Komponenten in übereinstimmender Menge. Anders als in Beispiel 1 wurde die Sekundärluftmenge auf 300 Nm³/h halbiert. Die eingesetzten Mengen von Wassersoff und Primärluft betrugen 210 bzw. 825 Nm³/h.

Die Verbrennung verlief stabil und es wurde pyrogene Kieselsäure mit der spezifischen Oberfläche von 150 Nm³/h hergestellt. Durch die hinsichtlich Sekundärluft optimierte Prozessführung konnte der Grit-Anteil im Produkt auf 0,005% reduziert werden. Das Verfahren zeichnete sich ebenfalls durch eine noch geringfügig bessere Raumzeitausbeute aus.

Die experimentellen Daten und Analysedaten sind in Tabelle 2 aufgeführt.

### Beispiel 6 (erfindungsgemäß)

Dieses Beispiel wurde analog Beispiel 5 ausgeführt, die Einsatzstoffe waren identisch und wurden in den nahezu gleichen Mengen eingesetzt (s. Tabelle 2 unten). Abweichend davon wurde die Einführung der flammenumgebenden Sekundärluft so umgebaut, dass ihre Ausströmungsgeschwindigkeit auf 10 m/s reduziert wurde. Es stellte sich heraus, dass durch diese geänderte Prozessführung bei der nach wie vor guten Flammenstabilität Produkte mit der gleichen Produktoberfläche von 150 m²/g, aber einem sehr niedrigen Grit-Gehalt von 0,003% herstellbar sind.

Die experimentellen Daten und Analysedaten sind in Tabelle 2 aufgeführt.

### Beispiel 7 (erfindungsgemäß)

Dieses Beispiel wurde analog Beispiel 6 durchgeführt. Die Sekundärluftmenge wurde stark auf 30 Nm³/h reduziert und deren Einführung so angepasst, dass deren Ausströmungsgeschwindigkeit gleichgeblieben ist. Die eingesetzten Mengen von Wassersoff und Primärluft betrugen 190 bzw. 775 Nm³/h.

Die Herstellung von pyrogener Kieselsäure nach diesem Prozess verlief wiederum stabil und führte zu einem Produkt mit übereinstimmender spezifischer Oberfläche von 150 m²/g. Der Grobgutanteil war dabei mit 0,002% sehr niedrig.

Die experimentellen Daten und Analysedaten sind in Tabelle 2 aufgeführt.

**Tabelle 1: Übersicht der Daten der Vergleichsbeispiele**

| | V1 | V2 | V3 | V4 |
|---|---|---|---|---|
| STC [kg/h] | 900 | - | 475 | 760 |
| TCS [kg/h] | 50 | - | - | 190 |
| DCS [kg/h] | 50 | - | - | - |
| MTCS [kg/h] | - | 500 | 225 | 50 |
| MDCS [kg/h] | - | - | - | - |
| H₂ [Nm³/h] | 265 | 50 | 150 | 250 |
| PL [Nm³/h] | 850 | 1000 | 1000 | 900 |
| SL [Nm³/h] | 600 | 600 | 600 | 600 |
| V'(SL)/V'(HS) | 0,48 | 0,53 | 0,48 | 0,47 |
| v(HS) [m/s] | 44 | 40 | 44 | 46 |
| v(SL) [m/s] | 40 | 40 | 40 | 40 |
| v(SL) /v(HS) | 0,90 | 1,01 | 0,91 | 0,88 |
| C/Si | 0,000 | 1,000 | 0,350 | 0,054 |
| H/Cl | 1,08 | 1,44 | 1,14 | 1,07 |
| BET [m²/g] | 150 | 150 | 300 | 150 |
| Grit-Gehalt [%] | 0,020 | 0,010 | 0,015 | 0,015 |
| Verbrennung | In. | St. | St. | In. |
| SiO₂-Produktion [kg/h] | 369 | 201 | 258 | 372 |
| RZ-Ausbeute | 199 | 116 | 140 | 197 |

**Tabelle 2: Übersicht der Daten der erfindungsgemäßen Beispiele**

| | Beispiele | | | | | | |
|---|---|---|---|---|---|---|---|
| | 1 | 2 | 3 | 4 | 5 | 6 | 7 |
| STC [kg/h] | 810 | 680 | 725 | 720 | 810 | 810 | 810 |
| TCS [kg/h] | 45 | 170 | - | 180 | 45 | 45 | 45 |
| DCS [kg/h] | 45 | - | - | - | 45 | 45 | 45 |
| MTCS [kg/h] | 100 | 150 | 75 | - | 100 | 100 | 100 |
| MDCS [kg/h] | - | - | - | 100 | - | - | - |
| H₂ [Nm³/h] | 220 | 210 | 210 | 190 | 210 | 205 | 190 |
| PL [Nm³/h] | 850 | 900 | 900 | 950 | 825 | 810 | 775 |
| SL [Nm³/h] | 600 | 600 | 600 | 600 | 300 | 300 | 30 |
| V'(SL)/V'(HS) | 0,52 | 0,50 | 0,48 | 0,52 | 0,27 | 0,27 | 0,03 |
| v(HS) [m/s] | 43 | 44 | 43 | 45 | 42 | 41 | 39 |
| v(SL) [m/s] | 40 | 40 | 40 | 40 | 20 | 10 | 10 |
| v(SL)/v(HS) | 0,94 | 0,90 | 0,93 | 0,88 | 0,48 | 0,24 | 0,26 |
| C/Si | 0,108 | 0,160 | 0,105 | 0,135 | 0,108 | 0,108 | 0,108 |
| H/Cl | 1,00 | 1,01 | 1,09 | 0,96 | 0,96 | 0,94 | 0,98 |
| BET [m²/g] | 150 | 150 | 300 | 150 | 150 | 150 | 150 |
| Grit-Gehalt [Gew.-%] | 0,008 | 0,007 | 0,007 | 0,006 | 0,005 | 0,003 | 0,002 |
| Verbrennung | St. | St. | St. | St. | St. | St. | St. |
| Si02-Produktion [kg/h] | 373 | 375 | 286 | 386 | 373 | 373 | 373 |
| RZ-Ausbeute | 206 | 203 | 157 | 205 | 253 | 256 | 329 |

**In den Tabellen 1 und 2 verwendete Abkürzungen:**
- STC, Siliciumtetrachlorid, SiCl₄
- TCS, Trichlorsilan, SiCl₃H
- DCS, Dichlorsilan, SiCl₂H₂
- MTCS, Methyltrichlorsilan, CH₃SiCl₃
- MDCS, Methyldichlorsilan, Si(CH₃)Cl₂H
- PL, Primärluft
- HS, Hauptströmung
- v(HS), Strömungsgeschwindigkeiten der Hauptströmung durch die Brennerdüse in den Reaktionsraum bzw. in die Brennkammer des Reaktors
   (Anmerkung: bei der Berechnung der Strömungsgeschwindigkeiten von HS und SL wurden Gas-Volumina bzw. -Durchflüsse in Normkubikmeter bzw. Nm³/h verwendet)
- SL, Sekundärluft
- v(SL), Strömungsgeschwindigkeit der flammenumgebenden Sekundärluft durch den Brenner in den Reaktionsraum bzw. in die Brennkammer des Reaktors
- V'(SL)/V'(HS), Volumenverhältnis der Sekundärluft zur Hauptströmung (Anmerkung: Für das Volumen wird im Rahmen dieser Erfindung das Symbol V' verwendet, um eine Verwechslung mit dem Symbol v für die Geschwindigkeit zu vermeiden.)
- C/Si, molares Verhältnis der Kohlenstoff- (C) zu Siliciumatome (Si) in der Hauptströmung Da anspruchsgemäß gilt: C/Si=10/BET bis 35/BET, muss dieser Wert für BET=150 m²/g zwischen 0,067 und 0,233 und für BET=300 m²/g zwischen 0,033 und 0,117 liegen.
- H/Cl, molares Verhältnis von Wasserstoff (H) zu Chlor (Cl) in der Hauptströmung Da anspruchsgemäß gilt: H/Cl-Verhältnis in der Hauptströmung = 0,45+(BET/600) bis 0,95+(BET/600), muss dieser Wert für BET=150 m²/g zwischen 0,70 und 1,20 und für BET=300 m²/g zwischen 0,95 und 1,45 liegen.
- BET, spezifische Oberfläche des erhaltenen Feststoffs bestimmt nach der BET-Methode
- Grit-Gehalt, Anteil an Grobgut
- Verbrennungsverhalten
   a) In., instabil, charakterisiert durch Flammenrückschläge oder
   b) St., stabil, ohne Störungen bei der Verbrennung, ohne Flammenrückschläge
- RZ-Ausbeute, Raum-Zeit-Ausbeute berechnet aus der Produktmenge (SiO₂ in g/h) pro 1 Nm³/h Einsatzstoffe (Silane + Brenngase + Primärluft + Sekundärgas)
- Bei den Prozentangaben handelt es sich um Gew.-%

## Patentansprüche

1. Verfahren zur Herstellung von hochdispersem Siliciumdioxid, **dadurch gekennzeichnet, dass**
- als Si-Quelle eine Mischung aus mindestens zwei Siliciumverbindungen eingesetzt wird, wobei
mindestens eine Siliciumverbindung kohlenstoffhaltig und mindestens eine Siliciumverbindung kohlenstofffrei ist,
- ein Brenngas zugeführt wird,
- eine Sauerstoff-enthaltende Quelle zugeführt wird,
- das molare C/Si-Verhältnis dieses Gemisches enthaltend die Siliciumverbindungen, das Brenngas und die Sauerstoff-enthaltende Quelle zwischen 10/BET und 35/BET liegt und
das molare H/Cl-Verhältnis dieses Gemisches zwischen 0,45+(BET/600) und 0,95+(BET/600) liegt,
wobei BET die spezifische Oberfläche des herzustellenden pyrogenen Siliciumdioxids gemessen nach der BET-Methode (entsprechend DIN ISO 9277) ist,
- dieses Gemisch als Hauptströmung in einen Reaktionsraum eingebracht, gezündet und umgesetzt wird und
- der entstandene Feststoff abgetrennt wird.

2. Verfahren nach Anspruch 1, **dadurch gekennzeichnet, dass** als kohlenstoffhaltige Siliciumverbindungen Methyltrichlorsilan (MTCS), Methyldichlorsilan (MDCS) oder eine Mischung aus MTCS und MDCS eingesetzt werden.

3. Verfahren nach einem oder mehreren der Ansprüche 1 oder 2, **dadurch gekennzeichnet, dass** als kohlenstofffreie Siliciumverbindungen Siliciumtetrachlorid (STC), Trichlorsilan (TCS), Dichlorsilan (DCS) oder eine Mischung aus mindestens zwei der genannten Verbindungen eingesetzt werden.

4. Verfahren nach einem oder mehreren der Ansprüche 1 bis 3, **dadurch gekennzeichnet, dass** als Si-Quelle Mischungen aus mindestens drei Siliciumverbindungen eingesetzt werden.

5. Verfahren nach einem oder mehreren der Ansprüche 1 bis 4, **dadurch gekennzeichnet, dass** als Si-Quelle Mischungen enthaltend Siliciumtetrachlorid, Trichlorsilan, Dichlorsilan und Methyltrichlorsilan verwendet werden.

6. Verfahren nach einem oder mehreren der Ansprüche 1 bis 5, **dadurch gekennzeichnet, dass** als Brenngas Wasserstoff eingesetzt wird.

7. Verfahren nach einem oder mehreren der Ansprüche 1 bis 6, **dadurch gekennzeichnet, dass** als Sauerstoff-enthaltende Quelle Luft eingesetzt wird.

8. Verfahren nach einem oder mehreren der Ansprüche 1 bis 7, **dadurch gekennzeichnet, dass** die Flamme von Sekundärgas umgeben ist.

9. Verfahren nach Anspruch 8, **dadurch gekennzeichnet, dass** als Sekundärgas Luft eingesetzt wird.

10. Verfahren nach einem oder mehreren der Ansprüche 8 oder 9, **dadurch gekennzeichnet, dass** das Volumen-Verhältnis vom Sekundärgas zur Hauptströmung zwischen 0,01 bis 0,4 liegt.

11. Verfahren nach einem oder mehreren der Ansprüche 8 bis 10, **dadurch gekennzeichnet, dass** das Verhältnis der Strömungsgeschwindigkeiten vom Sekundärgas und der Hauptströmung zwischen 0,1 und 0,8 liegt.

12. Verfahren nach einem oder mehreren der Ansprüche 8 bis 11, **dadurch gekennzeichnet, dass** das Sekundärgas bei der Einführung in den Reaktionsraum auf die Temperatur der Hauptströmung temperiert ist.

13. Verfahren nach einem oder mehreren der Ansprüche 1 bis 12, **dadurch gekennzeichnet, dass** der entstandene abgetrennte Feststoff mit Heißgasen behandelt wird.

## Claims

1. Process for producing finely divided silicon dioxide, **characterized in that**
- as Si source a mixture of at least two silicon compounds is used,
at least one silicon compound being carbon-containing
and at least one silicon compound being carbon-free,
- a fuel gas is supplied,
- an oxygen-containing source is supplied,
- the molar C/Si ratio of this mixture containing the silicon compounds, the fuel gas and the oxygen-containing source is between 10/BET and 35/BET and the molar H/Cl ratio of this mixture is between 0.45+(BET/600) and 0.95+(BET/600),
where BET is the specific surface area of the pyrogenic silicon dioxide under production, measured by the BET method (corresponding to DIN ISO 9277),
- this mixture is introduced as the main flow into a reaction space and ignited and reacted, and
- the resulting solid is isolated.

2. Process according to Claim 1, **characterized in that** said carbon-containing silicon compounds used comprise methyltrichlorosilane (MTCS), methyldichlorosilane (MDCS), or a mixture of MTCS and MDCS.

3. Process according to one or more of Claims 1 or 2, **characterized in that** said carbon-free silicon compounds used comprise silicon tetrachloride (STC), trichlorosilane (TCS), dichlorosilane (DCS), or a mixture of at least two of said compounds.

4. Process according to one or more of Claims 1 to 3, **characterized in that** said Si source used comprises mixtures of at least three silicon compounds.

5. Process according to one or more of Claims 1 to 4, **characterized in that** said Si source employed comprises mixtures comprising silicon tetrachloride, trichlorosilane, dichlorosilane, and methyltrichlorosilane.

6. Process according to one or more of Claims 1 to 5, **characterized in that** said fuel gas used comprises hydrogen.

7. Process according to one or more of Claims 1 to 6, **characterized in that** said oxygen-containing source used comprises air.

8. Process according to one or more of Claims 1 to 7, **characterized in that** the flame is surrounded by secondary gas.

9. Process according to Claim 8, **characterized in that** said secondary gas used comprises air.

10. Process according to one or more of Claims 8 or 9, **characterized in that** the volume ratio of secondary gas to the main flow is between 0.01 to 0.4.

11. Process according to one or more of Claims 8 to 10, **characterized in that** the ratio of the flow rates of the secondary gas and of the main flow is between 0.1 and 0.8.

12. Process according to one or more of Claims 8 to 11, **characterized in that** the secondary gas on introduction into the reaction space has been heated to the temperature of the main flow.

13. Process according to one or more of Claims 1 to 12, **characterized in that** the resulting isolated solid is treated with hot gases.

## Revendications

1. Procédé pour la préparation de dioxyde de silicium à haute dispersion, **caractérisé en ce que**
- un mélange d'au moins deux composés siliciés est utilisé comme source de Si, au moins un composé silicié étant carboné et au moins un composé silicié étant exempt de carbone,
- un gaz de combustion est alimenté,
- une source oxygénée est alimentée,
- le rapport molaire C/Si de ce mélange contenant les composés siliciés, le gaz de combustion et la source oxygénée est situé entre 10/BET et 35/BET et le rapport molaire H/Cl de ce mélange est situé entre 0,45+(BET/600) et 0,95+(BET/600), BET représentant la surface spécifique du dioxyde de silicium pyrogène à préparer, mesurée selon la méthode BET (conformément à la norme DIN ISO 9277),
- ce mélange est introduit en tant que flux principal dans un espace de réaction, allumé et transformé et
- le solide formé est séparé.

2. Procédé selon la revendication 1, **caractérisé en ce que** du méthyltrichlorosilane (MTCS), du méthyldichlorosilane (MDCS) ou un mélange de MTCS et de MDCS sont utilisés comme composés siliciés carbonés.

3. Procédé selon l'une ou plusieurs des revendications 1 ou 2, **caractérisé en ce que** du tétrachlorure de silicium (STC), du trichlorosilane (TCS), du dichlorosilane (DCS) ou un mélange d'au moins deux des composés mentionnés sont utilisés comme composés siliciés exempts de carbone.

4. Procédé selon l'une ou plusieurs des revendications 1 à 3, **caractérisé en ce que** des mélanges d'au moins trois composés siliciés sont utilisés comme source de Si.

5. Procédé selon l'une ou plusieurs des revendications 1 à 4, **caractérisé en ce que** des mélanges contenant du tétrachlorure de silicium, du trichlorosilane, du dichlorosilane et du méthyltrichlorosilane sont utilisés comme source de Si.

6. Procédé selon l'une ou plusieurs des revendications 1 à 5, **caractérisé en ce que** de l'hydrogène est utilisé comme gaz de combustion.

7. Procédé selon l'une ou plusieurs des revendications 1 à 6, **caractérisé en ce que** de l'air est utilisé comme source oxygénée.

8. Procédé selon l'une ou plusieurs des revendications 1 à 7, **caractérisé en ce que** la flamme est entourée de gaz secondaire.

9. Procédé selon la revendication 8, **caractérisé en ce que** de l'air est utilisé comme gaz secondaire.

10. Procédé selon l'une ou plusieurs des revendications 8 ou 9, **caractérisé en ce que** le rapport volumique de gaz secondaire à flux principal est situé entre 0,01 et 0,4.

11. Procédé selon l'une ou plusieurs des revendications 8 à 10, **caractérisé en ce que** le rapport des vitesses d'écoulement du gaz secondaire et du flux principal est situé entre 0,1 et 0,8.

12. Procédé selon l'une ou plusieurs des revendications 8 à 11, **caractérisé en ce que** la température du gaz secondaire lors de l'introduction dans l'espace de réaction est réglée à la température du flux principal.

13. Procédé selon l'une ou plusieurs des revendications 1 à 12, **caractérisé en ce que** le solide formé séparé est traité avec des gaz chauds.
